# EUROPEAN PATENT SPECIFICATION

(11) **EP 2 564 456 B1**
(45) Date of publication and mention of the grant of the patent: **26.05.2021**
(21) Application number: 11721848.7
(22) Date of filing: 26.04.2011
(51) Int. Cl.: H01M 4/92, C22C 5/04, C22C 19/03, C22C 30/00

(54) **PLATINUM NICKEL CATALYST ALLOY**
PLATIN-NICKEL-KATALYSATORLEGIERUNG
ALLIAGE DE CATALYSEUR AU PLATINE-NICKEL

(30) Priority: 26.04.2010 US 328049 P
(43) Date of publication of application: 06.03.2013
(73) Proprietor: 3M Innovative Properties Company, St. Paul, MN 55133-3427 (US)
(72) Inventor: DEBE, Mark K., Saint Paul, Minnesota 55133-3427 (US); VERNSTROM, George D., Saint Paul, Minnesota 55133-3427 (US); STEINBACH, Andrew J. L., Saint Paul, Minnesota 55133-3427 (US)
(74) Representative: Mathys & Squire
(86) International application number: PCT/US2011/033949
(87) International publication number: WO 2011/139693

(56) References cited:
- WO-A2-2007/075437
- US-A1- 2007 082 256
- A. BONAKDARPOUR ET AL: "Studies of Transition Metal Dissolution from Combinatorially Sputtered, Nanostructured Pt[sub 1-x]M[sub x] (M = Fe, Ni; 0<x<1) Electrocatalysts for PEM Fuel Cells", JOURNAL OF THE ELECTROCHEMICAL SOCIETY, vol. 152, no. 1, 1 January 2005 (2005-01-01), pages A61-A72, XP55011941, ISSN: 0013-4651, DOI: 10.1149/1.1828971
- MARTINE BORRELL ET AL: "Study of silica supported PtxNi1-x catalysts by ion scattering spectroscopy", MIKROCHIMICA ACTA, vol. 125, no. 1-4, 1 March 1997 (1997-03-01), pages 389-393, XP55010802, ISSN: 0026-3672, DOI: 10.1007/BF01246216
- T. P. MOFFAT ET AL: "Oxygen Reduction Kinetics on Electrodeposited Pt, Pt[sub 100-x]Ni[sub x], and Pt[sub 100-x]Co[sub x]", JOURNAL OF THE ELECTROCHEMICAL SOCIETY, vol. 156, no. 2, 1 January 2009 (2009-01-01), pages B238-B251, XP55011936, ISSN: 0013-4651, DOI: 10.1149/1.3033515
- J. J. MALLETT ET AL: "Compositional Control in Electrodeposited Ni[sub x]Pt[sub 1-x] Films", JOURNAL OF THE ELECTROCHEMICAL SOCIETY, vol. 155, no. 1, 1 January 2008 (2008-01-01), pages D1-D9, XP55011938, ISSN: 0013-4651, DOI: 10.1149/1.2799072
- YANG X ET AL: "PtxNi1-x nanoparticles as catalysts for hydrogen generation from hydrolysis of ammonia borane", INTERNATIONAL JOURNAL OF HYDROGEN ENERGY, ELSEVIER SCIENCE PUBLISHERS B.V., BARKING, GB, vol. 34, no. 21, 1 November 2009 (2009-11-01), pages 8785-8791, XP026698195, ISSN: 0360-3199, DOI: 10.1016/J.IJHYDENE.2009.08.075 [retrieved on 2009-09-26]
- Y. BING AND AL: "Nanostructured Pt-alloy electrocatalysts for PEM fuell cell oxygen reduction reaction", CHEMICAL SCOCITEY REVIEW, vol. 39, 25 March 2010 (2010-03-25), pages 2184-2202, XP002663496,
- M. K. DEBE ET AL: "Extraordinary Oxygen Reduction Activity of Pt3Ni7", JOURNAL OF THE ELECTROCHEMICAL SOCIETY, vol. 158, no. 8, 1 January 2011 (2011-01-01), pages B910-B918, XP55011955, ISSN: 0013-4651, DOI: 10.1149/1.3595748

## Description

### Field of the Disclosure

This disclosure relates to a Pt-Ni catalyst which demonstrates an unusually high oxygen reduction mass activity. The catalyst may be particularly useful as a fuel cell catalyst and more specifically as a fuel cell cathode catalyst.

### Background of the Disclosure

U.S. Patent No. 5,879,827 discloses nanostructured elements comprising acicular microstructured support whiskers bearing acicular nanoscopic catalyst particles. The catalyst particles may comprise alternating layers of different catalyst materials which may differ in composition, in degree of alloying or in degree of crystallinity.

U.S. Patent No. 6,482,763discloses fuel cell electrode catalysts comprising alternating platinum-containing layers and layers containing suboxides of a second metal that display an early onset of CO oxidation.

U.S. Patents. Nos. 5,338,430, 5,879,828, 6,040,077 and 6,319,293also concern nanostructured thin film catalysts.

U.S. Patents. Nos. 4,812,352, 5,039,561, 5,176,786, and 5,336,558concern microstructures.

U.S. Patent No. 7,419,741 fuel cell cathode catalysts comprising nanostructures formed by depositing alternating layers of platinum and a second layer onto a microstructure support, which may form a ternary catalyst.

U.S. Patent No. 7,622,217discloses fuel cell cathode catalysts comprising microstructured support whiskers bearing nanoscopic catalyst particles comprising platinum and manganese and at least one other metal at specified volume ratios and Mn content, where other metal is typically Ni or Co.

Bonakdarpour A. et al.; "Dissolution Of Transition Metals in Combinatorially Sputtered Pt1-x-yMxMý (M, M' = Co, Ni, Mn, Fe) PEMFC Electrocatalysts", Journal Of The Electrochemical Society, Vol. 153 No. 10, 2006, pp. A1835-A1846 reports the dissolution of Fe and Ni from Pt₁₋ₓMₓ (M = Fe, Ni; 0 < x < 1) oxygen reduction electrocatalysts under simulated operating conditions (low pH, 80°C) of proton exchange membrane (PEM) fuel cells. The alloys were prepared combinatorially by sputtering Pt and M (M = Fe, Ni) onto thin films of nanostructured whisker-like supports, and mapped over the entire composition range of the binary systems. For 0 < x < 1.0. The formation of randomly ordered substitutional solid solutions of Pt₁₋ₓFeₓ, and Pt₁₋ₓNiₓ alloys were observed. Electron microprobe measurements show that transition metals were removed from all compositions during acid treatment, but that the percentage removed increased with x, acid strength, and temperature. For small values of x (x < 0.6) no substantial changes in the lattice size were observed upon dissolution of Fe or Ni suggesting that the dissolved transition metals originate from the surface. However, for electrocatalysts with x > 0.6, the lattice constant expanded indicating that transition metals dissolved also from the bulk. X-ray photoelectron spectroscopy results showed complete removal of surface Ni (Fe) after acid treatment at 80°C for all compositions. The results of the acid treatments compared well to the composition changes that occur when a Pt₁₋ₓFeₓ or Pt_{1- x}Niₓ combinatorial catalyst library was used in an operating PEM fuel cell.

Borrell, Martine et al.; "Study Of Silica Supported PtxNil-x Catalysts By Ion Scattering Spectroscopy", Mikrochimica Acta, Vol. 125, No. 1 - 4, March 1 1997, pp. 389-393 reports on supported PtₓNi₁₋ₓ, catalysts used for hydrogenation reactions, and stated it seemed necessary to assess the surface composition of the reduced samples. To approach the usual reduction conditions in situ reduction was used in a reaction chamber (1 mbar H₂ up to 500°C) placed in ultra high vacuum recipient (UHV: 10⁻⁹ to 2.10⁻¹⁰ mbar). All ion scattering spectroscopy measurements were performed in UHV. Charging of the samples was avoided by electron bombardment (5eV). The variation of the surface composition was determined after subsequent sputtering, thermal treatment at 500°C and during oxygen adsorption. A comparison with previous results of surface compositions of binary alloys (polycrystalline foils and single crystals PtₓNi₁₋ₓ) was given.

Moffat, T. P. et al.; "Oxygen Reduction Kinetics On Electrodeposited Pt, Pt 100-xNi x, and Pt100-xCox", Journal of the Electrochemical Society, Vol. 156, No. 2, January 1, 2009, pp. B238-B251 reports the kinetics of the oxygen reduction reactions (ORR) on a series of electrodeposited Pt₁₀₀₋ₓNiₓ and Pt₁₀₀₋ₓCoₓ alloy films examined in comparison to electrodeposited Pt and mechanically polished polycrystalline Pt. The alloys were electrodeposited at positive potentials to grow the pure iron group metal. The growth process was ascribed to strong bonding enthalpy between Pt and the iron group metals that can be envisioned as iron-group underpotential deposition (upd) on Pt surface sites coupled with ongoing Pt overpotential electrodeposition. Rotating disk electrode measurements of the ORR kinetics, normalized for the H upd electoactive area, indicated a ∼ 1.9 to 2.7-fold catalytic enhancement on Pt₁₀₀₋ₓCoₓ and Pt₁₀₀₋ₓNiₓ, when x is in the range of 25-35, as compared to electrodeposited Pt films grown under similar conditions. An even greater ORR enhancement factor, between 3 and 4.8, was noted for dealloyed transition metal-rich (x > 75) films. Different schemes for integrating the electrodeposition (and dealloying) process into the fabrication of fuel cell membrane electrode array were also briefly discussed.

Mallett, J. J. et al.; "Compositional Control In Electrodeposited Nix Pt1-x Films", Journal of the Electrochemical Society, Vol. 155, No. 1, January 1, 2008, pp. D1 - D9 reports electrochemical codeposition of a series of face-centered cubic NiₓPt₁₋ₓ alloys where 0.1 < x < 0.95. The alloy composition was a monotonic function of potential. The Pt-rich NiₓPt₁₋ₓ alloys were formed at positive potentials to deposit elemental Ni. Codeposition was ascribed to the negative enthalpy of NiₓPt₁₋ₓ alloy formation that proceeded via a Ni underpotential deposition reaction in concert with Pt deposition. This process occurred at higher Ni underpotentials than anticipated based on extrapolated literature data from thermochemical measurements and ab initio calculations of alloy formation. In contrast, Ni-rich NiₓPt₁₋ₓ alloys were produced at Ni overpotentials although the films were formed under conditions where pure Ni deposition was otherwise kinetically hindered. The alloy composition corresponding to the transition from underpotential to overpotential deposition was a function of the PtCl₄/NiCl₂ electrolyte composition.

The films were found to be bright and specular over the full range of compositions studied (grain size < 10 nm). Atomic force microscopy yielded root-mean-square roughness values on the order of 5 nm for Ni-rich deposits up to 2.5 micrometers thick.

### Summary of the Disclosure

This disclosure relates to a Pt-Ni catalyst according to claims 1 or 12, which demonstrates an unusually high oxygen reduction mass activity. The Pt-Ni catalyst is a Pt-Ni binary alloy. The catalyst comprises nanostructured elements comprising microstructured support whiskers bearing a thin film of nanoscopic catalyst particles comprising a catalyst material according to the formula PtₓNi₍₁₋ₓ₎ where x is between 0.21 and 0.39, wherein nanoscopic catalyst particles means particles of catalyst material having at least one dimension equal to or smaller than about 15 nm or having a crystallite size of about 15 nm or less, as measure from diffraction peak half widths of standard 2-theta x-ray diffraction scans. In some embodiments, the catalyst may be characterized as having a Pt fcc lattice parameter of less than 3.71 Angstroms or 0.371 nm. In some embodiments the catalyst has a Pt fcc lattice parameter of less than 3.72 Angstroms or 0.372 nm. In some embodiments the catalyst has a Pt fcc lattice parameter of less than 3.73 Angstroms or 0.373 nm. In some embodiments the catalyst has a Pt fcc lattice parameter of between 3.69 Angstroms (or 0.369 nm) and 3.73 Angstroms (or 0.373 nm). In some embodiments the catalyst has a Pt fcc lattice parameter of between 3.70 Angstroms (or 0.370 nm) and 3.72 Angstroms (or 0.372 nm). In some embodiments, the catalyst may be characterized as having a composition of close to PtₓNi₍₁₋ₓ₎, where x is between 0.21 and 0.39. In some embodiments x is between 0.21 and 0.34. In some embodiments x is between 0.22 and 0.38. In some embodiments x is between 0.22 and 0.33. In some embodiments x is between 0.26 and 0.33. In some embodiments x is between 0.28 and 0.32.

The catalyst comprises nanostructured elements comprising microstructured support whiskers bearing a thin film of nanoscopic catalyst particles comprising a catalyst material described above.

The catalyst may be particularly useful as a fuel cell catalyst and more specifically as a fuel cell cathode catalyst.

In this application:
"membrane electrode assembly" means a structure comprising a membrane that includes an electrolyte, typically a polymer electrolyte, and at least one but more typically two or more electrodes adjoining the membrane;
"nanostructured element" means an acicular, discrete, microscopic structure comprising a catalytic material on at least a portion of its surface;
"nanoscopic catalyst particle" means a particle of catalyst material having at least one dimension equal to or smaller than about 15 nm or having a crystallite size of about 15 nm or less, as measured from diffraction peak half widths of standard 2-theta x-ray diffraction scans;
"thin film of nanoscopic catalyst particles" includes films of discrete nanoscopic catalyst particles, films of fused nanoscopic catalyst particles, and films of nanoscopic catalyst grains which are crystalline or amorphous; typically films of discrete or fused nanoscopic catalyst particles, and most typically films of discrete nanoscopic catalyst particles;
"acicular" means having a ratio of length to average cross-sectional width of greater than or equal to 3;
"discrete" refers to distinct elements, having a separate identity, but does not preclude elements from being in contact with one another;
"microscopic" means having at least one dimension equal to or smaller than about a micrometer;
"planar equivalent thickness" means, in regard to a layer distributed on a surface, which may be distributed unevenly, and which surface may be an uneven surface (such as a layer of snow distributed across a landscape, or a layer of atoms distributed in a process of vacuum deposition), a thickness calculated on the assumption that the total mass of the layer was spread evenly over a plane covering the same area as the projected area of the surface (noting that the projected area covered by the surface is less than or equal to the total surface area of the surface, once uneven features and convolutions are ignored);
"bilayer planar equivalent thickness" means the total planar equivalent thickness of a first layer (as described herein) and the next occurring second layer (as described herein).

It is an advantage of the present disclosure to provide catalysts for use in fuel cells.

### Brief Description of the Drawing

FIG. 1 is a graph of Pt alloy fcc lattice parameter, as measured by electron microprobe analysis (XRD), versus the combined atomic percentages of Co and Ni, for a variety of ternary Pt alloys.
FIG. 2 is a graph of measured oxygen reduction mass activity versus PtNi fcc lattice parameter, as measured by electron microprobe analysis (XRD), for a series of PtNi binary catalysts.
FIG. 3 is a graph of measured electrochemical surface area, measured in a fuel cell, versus PtNi fcc lattice parameter, as measured by electron microprobe analysis (XRD), for a series of PtNi binary catalysts.
FIG. 4 is a graph of fuel cell mass activity measured in a fuel cell versus atomic percentage Ni in a series of PtₓNi_{y} alloy compositions, as measured by EMP, and accounting for all elements detected, including oxygen.
FIG. 5 is a graph of fuel cell mass activity measured in a fuel cell versus atomic percentage of Ni in a series of PtₓNi_{y} alloy compositions, as measured by EMP, and accounting for just the Ni and Pt.
FIG. 6 is a graph of fuel cell mass activity measured in a fuel cell versus atomic percentage of Ni in a series of PtₓNi_{y} alloy compositions, as measured by XRF
FIG. 7 is a graph of fuel cell mass activity measured in a fuel cell versus atomic percentage Ni in a series of PtₓNi_{y} alloy compositions, as measured by gravimetric means.

### Detailed Description

The present disclosure provides a Pt-Ni catalyst which demonstrates an unusually high oxygen reduction mass activity. The catalyst comprises nanostructured elements comprising microstructured support whiskers bearing a thin film of nanoscopic catalyst particles comprising a catalyst material according to the formula PtₓNi₍₁₋ₓ₎ where x is between 0.21 and 0.39, wherein nanoscopic catalyst particles means particles of catalyst material having at least one dimension equal to or smaller than about 15 nm or having a crystallite size of about 15 nm or less, as measure from diffraction peak half widths of standard 2-theta x-ray diffraction scans. In some embodiments, the catalyst may be characterized as having Pt fcc lattice parameter of less than 3.71 Angstroms. In some embodiments, the catalyst may be characterized as having a composition of close to PtₓNi₍₁₋ₓ₎, where x is between 0.21 and 0.39. The catalyst may be particularly useful as a fuel cell catalyst and more specifically as a fuel cell cathode catalyst.

This disclosure describes a specific Pt alloy crystal structure and lattice parameter that gives a significant increase in oxygen reduction activity when used as a fuel cell cathode catalyst. The activity with a PtNi alloy having a high atomic percentage of Ni is seen to dramatically increase as the atomic percentage changes over a very small range of about 60% to about 65% as measured by electron microprobe, or 65% to about 73% as measured gravimetrically (preferred), or 73% to about 78% as determined by X-ray fluorescence, and the fcc lattice parameter drops below 3.71 Angstroms. The low value of the lattice parameter is believed to be critical.

This disclosure, demonstrated with a PtNi binary alloy, allows the oxygen reduction activity to be doubled over standard catalyst compositions, e.g., NSTF Pt_{68.7}Co_{28.5}Mn_{2.7} ternary catalyst. The current mass activity value measured with the new PtNi alloy at a lattice parameter of ∼ 3.71 Angstroms, is 0.32 A/mg_{Pt,} using only 0.10 mg_{Pt}/cm².

This disclosure has the potential to double the current best NSTF catalyst ORR activity, thereby directly improving high current density performance and ultimately the stack size and costs, the operating efficiency at low power operating conditions and hence vehicle fuel efficiency, and indirectly affect other factors such as water management and break-in conditioning.

Objects and advantages of this disclosure are further illustrated by the following examples, but the particular materials and amounts thereof recited in these examples, as well as other conditions and details, should not be construed to unduly limit this disclosure.

### Examples

Unless otherwise noted, all reagents were obtained or are available from Aldrich Chemical Co., Milwaukee, WI, or may be synthesized by known methods.

Pt binary and ternary alloys of varying compositions described below were made by sputter deposition of individual multi-layers of the respective elements onto NSTF whisker support films, as described in the prior art cited above, e.g., US 7,419,741. The catalysts were applied to proton exchange membranes having an equivalent weight of approximately 850, and a thickness of 20 microns. On the anode side, the catalyst loading was generally 0.05 or 0.1 mg-Pt/cm² of PtCoMn in the composition Pt_{68.7}Co_{28.5}Mn_{2.7}. On the cathode side, the Pt loading in the various alloys was 0.10 mg/cm² for most of the data below, and 0.15 mg/cm² of Pt for four of the PtNi examples. The catalysts were transferred to the surface of the membrane by hot roll lamination, and the subsequent catalyst coated membranes tested in 50cm² fuel cells after addition of gas diffusion layers. The cathode catalysts' activities for oxygen reduction were measured according to protocols specified by the Dept. of Energy.

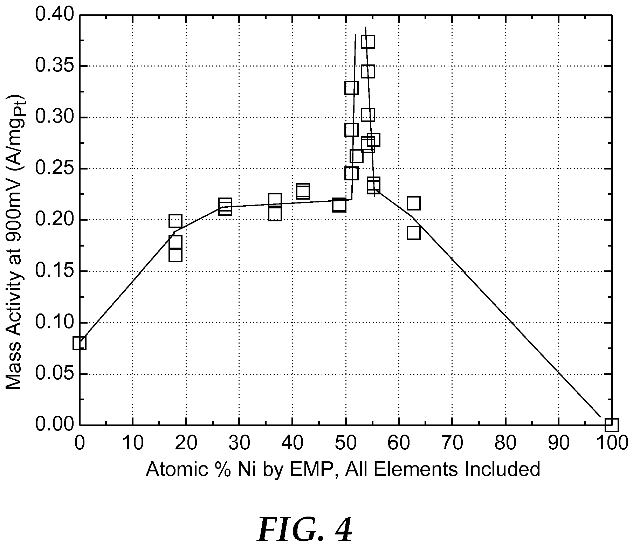

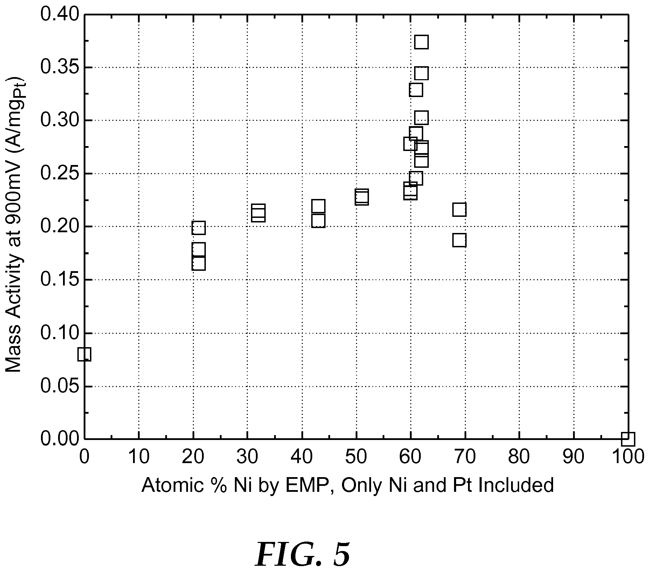

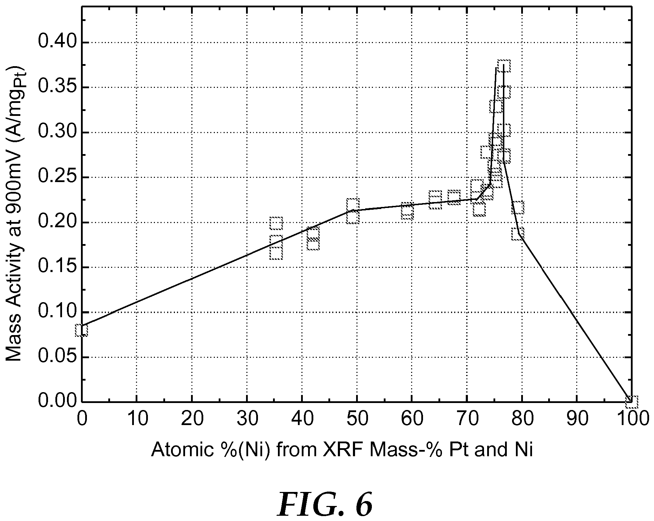

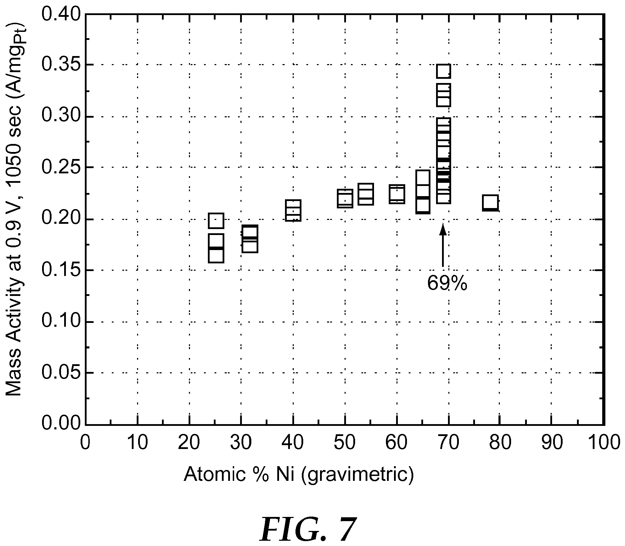

The catalyst alloy compositions were determined by multiple methods, including the initial sputter deposition calibration files (designated as gravimetric in Fig. 7), or by x-ray fluorescence (designated as XRF in Fig. 6), or by electron microprobe analyses (designated as EMP in Figs. 4 and 5).

The catalyst alloy structural properties were measure by X-ray diffraction (XRD) before the catalysts were applied to the membranes and tested in fuel cells.

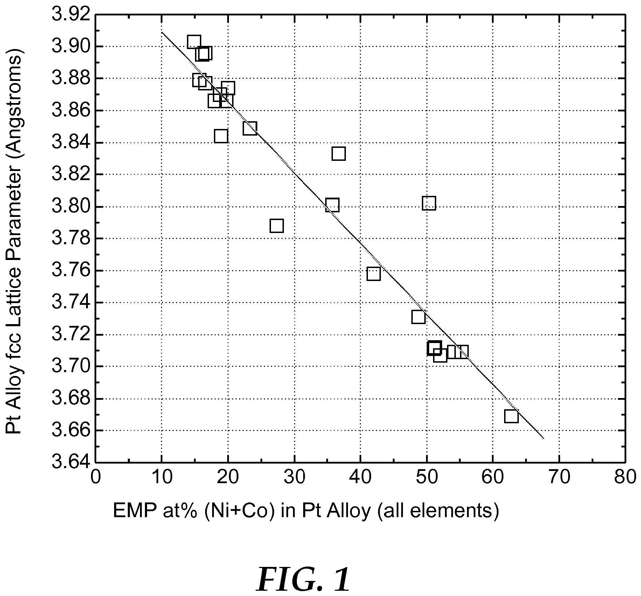

FIG. 1 is a graph of Pt alloy fcc lattice parameter, as measured by electron microprobe analysis (XRD), versus the combined atomic percentages of Co and Ni, for a variety of ternary Pt alloys. A linear best-fit line is also shown. It is seen that the Pt face centered cubic lattice parameter decreases monotonically as the amount of transition metal increases in the alloy.

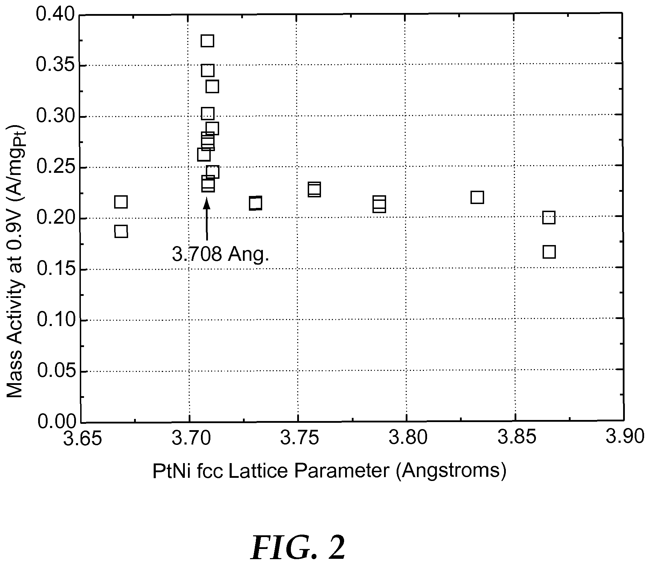

FIG. 2 is a graph of measured oxygen reduction mass activity versus PtNi fcc lattice parameter, as measured by electron microprobe analysis (XRD), for a series of PtNi binary catalysts. FIG. 2 shows a dramatic peak at a PtNi fcc lattice parameter of approximately 3.71 Angstroms.

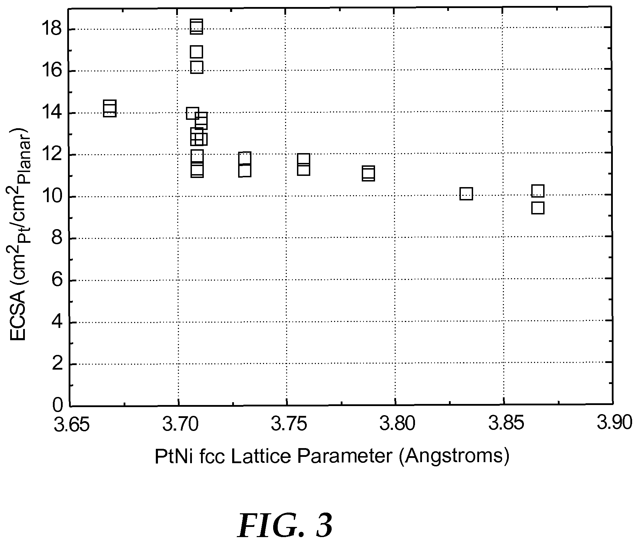

FIG. 3 is a graph of measured electrochemical surface area, measured in a fuel cell, versus PtNi fcc lattice parameter, as measured by electron microprobe analysis (XRD), for a series of PtNi binary catalysts. FIG. 3 also shows a dramatic peak at a PtNi fcc lattice parameter of approximately 3.71 Angstroms FIG. 3 shows that the electrochemical surface area, measured in the fuel cell by conventional H_{upd} methods, peaks at this lattice parameter.

FIG. 4 is a graph of fuel cell mass activity measured in a fuel cell versus atomic percentage Ni in a series of PtₓNi_{y} alloy compositions, as measured by EMP, and accounting for all elements detected, including oxygen. FIG. 5 is a graph of fuel cell mass activity measured in a fuel cell versus atomic percentage of Ni in a series of PtₓNi_{y} alloy compositions, as measured by EMP, and accounting for just the Ni and Pt. FIG. 6 is a graph of fuel cell mass activity measured in a fuel cell versus atomic percentage of Ni in a series of PtₓNi_{y} alloy compositions, as measured by XRF. It is seen that there is a sharp peak in the mass activity as a function of composition, but the apparent position of the peak with respect to % Ni, depends on the technique used to measure it and assumptions made. However, the most likely relative Ni/Pt composition value of corresponding to the peak in mass activity is that it is close to the 62% atomic percent Ni.

FIG. 7 is a graph of fuel cell mass activity measured in a fuel cell versus atomic percentage Ni in a series of PtₓNi_{y} alloy compositions, as measured by gravimetric means. The gravimetric method is not as precise (±5%), but may be more accurate and hence shows the peak as closer to the Pt₃₀Ni₇₀ composition

Various modifications and alterations of this disclosure will become apparent to those skilled in the art without departing from the scope and principles of this disclosure, and it should be understood that this disclosure is not to be unduly limited to the illustrative embodiments set forth hereinabove.

## Claims

1. A catalyst comprising nanostructured elements comprising microstructured support whiskers bearing a thin film of nanoscopic catalyst particles comprising a catalyst material according to the formula PtₓNi₍₁₋ₓ₎ where x is between 0.21 and 0.39, wherein nanoscopic catalyst particles means particles of catalyst material having at least one dimension equal to or smaller than about 15 nm or having a crystallite size of about 15 nm or less, as measure from diffraction peak half widths of standard 2-theta x-ray diffraction scans.

2. The catalyst according to claim 1 wherein x is between 0.21 and 0.34.

3. The catalyst according to claim 1 wherein x is between 0.22 and 0.38.

4. The catalyst according to claim 1 wherein x is between 0.22 and 0.33.

5. The catalyst according to claim 1 wherein x is between 0.26 and 0.33.

6. The catalyst according to claim 1 wherein x is between 0.28 and 0.32.

7. The catalyst according to any of claims 1 - 6 having a Pt fcc lattice parameter of less than 3.73 Angstroms.

8. The catalyst according to any of claims 1 - 6 having a Pt fcc lattice parameter of less than 3.72 Angstroms.

9. The catalyst according to any of claims 1 - 6 having a Pt fcc lattice parameter of less than 3.71 Angstroms.

10. The catalyst according to any of claims 1 - 9 having a Pt fcc lattice parameter of between 3.69 Angstroms and 3.73 Angstroms.

11. The catalyst according to any of claims 1 - 9 having a Pt fcc lattice parameter of between 3.70 Angstroms and 3.72 Angstroms.

12. A catalyst comprising nanostructured elements comprising microstructured support whiskers bearing a thin film of nanoscopic catalyst particles comprising a catalyst material which is a PtNi binary alloy having a Pt fcc lattice parameter of between 3.69 Angstroms and 3.73 Angstroms, wherein nanoscopic catalyst particles means particles of catalyst material having at least one dimension equal to or smaller than about 15 nm or having a crystallite size of about 15 nm or less, as measure from diffraction peak half widths of standard 2-theta x-ray diffraction scans.

13. The catalyst according to claim 12 having a Pt fcc lattice parameter of between 3.70 Angstroms and 3.72 Angstroms.

14. A fuel cell membrane electrode assembly comprising the catalyst of any of claims 1 - 13.

15. A fuel cell membrane electrode assembly comprising a cathode catalyst which is the catalyst of any of claims 1 - 13.

## Patentansprüche

1. Ein Katalysator, umfassend nanostrukturierte Elemente, umfassend mikrostrukturierte Träger-Whisker, die eine dünne Schicht nanoskopischer Katalysatorpartikel tragen, umfassend ein Katalysatormaterial, das der Formel PtₓNi₍₁₋ₓ₎ entspricht, wobei x zwischen 0,21 und 0,39 liegt, wobei nanoskopische Katalysatorpartikel Teilchen aus Katalysatormaterial bedeuten, die mindestens eine Abmessung, die gleich oder kleiner als etwa 15 nm ist, oder eine Kristallitgröße von etwa 15 nm oder weniger, gemessen anhand von Beugungspeak-Halbwertsbreiten von üblichen 2 Theta-Röntgenbeugungsdiagrammen, aufweisen.

2. Der Katalysator nach Anspruch 1, wobei x zwischen 0,21 und 0,34 liegt.

3. Der Katalysator nach Anspruch 1, wobei x zwischen 0,22 und 0,38 liegt.

4. Der Katalysator nach Anspruch 1, wobei x zwischen 0,22 und 0,33 liegt.

5. Der Katalysator nach Anspruch 1, wobei x zwischen 0,26 und 0,33 liegt.

6. Der Katalysator nach Anspruch 1, wobei x zwischen 0,28 und 0,32 liegt.

7. Der Katalysator nach einem der Ansprüche 1 bis 6 mit einem Gitterparameter für das kubisch-flächenzentrierte (kfz) Pt-Gitter von weniger als 3,73 Angström.

8. Der Katalysator nach einem der Ansprüche 1 bis 6 mit einem Gitterparameter für das kfz Pt-Gitter von weniger als 3,72 Angström.

9. Der Katalysator nach einem der Ansprüche 1 bis 6 mit einem Gitterparameter für das kfz Pt-Gitter von weniger als 3,71 Angström.

10. Der Katalysator nach einem der Ansprüche 1 bis 9 mit einem Gitterparameter für das kfz Pt-Gitter zwischen 3,69 Angström und 3,73 Angström.

11. Der Katalysator nach einem der Ansprüche 1 bis 9 mit einem Gitterparameter für das kfz Pt-Gitter zwischen 3,70 Angström und 3,72 Angström.

12. Ein Katalysator, umfassend nanostrukturierte Elemente, umfassend mikrostrukturierte Träger-Whisker, die eine dünne Schicht nanoskopischer Katalysatorpartikel tragen, umfassend ein Katalysatormaterial, das eine binäre PtNi-Legierung mit einem Gitterparameter für das kfz Pt-Gitter zwischen 3,69 Angström und 3,73 Angström ist, wobei nanoskopische Katalysatorpartikel Teilchen aus Katalysatormaterial bedeuten, die mindestens eine Abmessung, die gleich oder kleiner als etwa 15 nm ist, oder eine Kristallitgröße von etwa 15 nm oder weniger, gemessen anhand von Beugungspeak-Halbwertsbreiten von üblichen 2 Theta-Röntgenbeugungsdiagrammen, aufweisen.

13. Der Katalysator nach Anspruch 12 mit einem Gitterparameter für das kfz Pt-Gitter zwischen 3,70 Angström und 3,72 Angström.

14. Eine Membran-Elektroden-Brennstoffzellenbaugruppe umfassend den Katalysator nach einem der Ansprüche 1 bis 13.

15. Eine Membran-Elektroden-Brennstoffzellenbaugruppe, umfassend einen Kathodenkatalysator, der der Katalysator nach einem der Ansprüche 1 bis 13 ist.

## Revendications

1. Catalyseur comprenant des éléments nanostructurés comprenant des trichites de support microstructurées portant un mince film de particules de catalyseur nanoscopiques comprenant un matériau catalyseur selon la formule PtₓNi₍₁₋ₓ₎ où x est compris entre 0,21 et 0,39, dans lequel des particules de catalyseur nanoscopiques désignent des particules de matériau catalyseur ayant au moins une dimension égale à ou plus petite qu'environ 15 nm ou ayant une taille de cristallite d'environ 15 nm ou moins, en tant que mesure à partir de demi-largeurs de pic de diffraction de balayages de diffraction des rayons X à 2-thêta standard.

2. Catalyseur selon la revendication 1 dans lequel x est compris entre 0,21 et 0,34.

3. Catalyseur selon la revendication 1 dans lequel x est compris entre 0,22 et 0,38.

4. Catalyseur selon la revendication 1 dans lequel x est compris entre 0,22 et 0,33.

5. Catalyseur selon la revendication 1 dans lequel x est compris entre 0,26 et 0,33.

6. Catalyseur selon la revendication 1 dans lequel x est compris entre 0,28 et 0,32.

7. Catalyseur selon l'une quelconque des revendications 1 à 6 ayant un paramètre de maille fcc de Pt inférieur à 3,73 angströms.

8. Catalyseur selon l'une quelconque des revendications 1 à 6 ayant un paramètre de maille fcc de Pt inférieur à 3,72 angströms.

9. Catalyseur selon l'une quelconque des revendications 1 à 6 ayant un paramètre de maille fcc de Pt inférieur à 3,71 angströms.

10. Catalyseur selon l'une quelconque des revendications 1 à 9 ayant un paramètre de maille fcc de Pt compris entre 3,69 angströms et 3,73 angströms.

11. Catalyseur selon l'une quelconque des revendications 1 à 9 ayant un paramètre de maille fcc de Pt compris entre 3,70 angströms et 3,72 angströms.

12. Catalyseur comprenant des éléments nanostructurés comprenant des trichites de support microstructurées portant un mince film de particules de catalyseur nanoscopiques comprenant un matériau catalyseur qui est un alliage binaire PtNi ayant un paramètre de maille fcc de Pt compris entre 3,69 angströms et 3,73 angströms, dans lequel des particules de catalyseur nanoscopiques désignent des particules de matériau catalyseur ayant au moins une dimension égale à ou plus petite qu'environ 15 nm ou ayant une taille de cristallite d'environ 15 nm ou moins, en tant que mesure à partir de demi-largeurs de pic de diffraction de balayages de diffraction des rayons X à 2-thêta standard.

13. Catalyseur selon la revendication 12 ayant un paramètre de maille fcc de Pt compris entre 3,70 angströms et 3,72 angströms.

14. Ensemble électrode à membrane de pile à combustible comprenant le catalyseur selon l'une quelconque des revendications 1 à 13.

15. Ensemble électrode à membrane de pile à combustible comprenant un catalyseur de cathode qui est le catalyseur selon l'une quelconque des revendications 1 à 13.
